# EUROPÄISCHE PATENTSCHRIFT

(11) **EP 2 873 141 B1**
(45) Veröffentlichungstag und Bekanntmachung des Hinweises auf die Patenterteilung: **01.02.2017**
(21) Anmeldenummer: 13753293.3
(22) Anmeldetag: 09.08.2013
(51) Int. Cl.: H02K 11/02, H02K 49/04

(54) **VORRICHTUNG MIT MAGNETISCHER ABSCHIRMUNG ZUM BREMSEN EINER ROTIERENDEN ACHSE**
DEVICE WITH MAGNETIC SCREEN FOR RETARDING A ROTATING AXLE
DISPOSITIF AVEC ECRAN MAGNETIQUE POUR RALENTIR UN ARBRE ROTATIF.

(30) Priorität: 24.08.2012 DE 102012215106
(43) Veröffentlichungstag der Anmeldung: 20.05.2015
(73) Patentinhaber: Siemens Aktiengesellschaft, 80333 München (DE)
(72) Erfinder: ERNST, Marco, 8010 Graz (AT); SEIWALD, Andreas, 6306 Söll Tirol (AT); ZEBUNKE, Stefan, 96199 Zapfendorf (DE)
(86) Internationale Anmeldenummer: PCT/EP2013/066735
(87) Internationale Veröffentlichungsnummer: WO 2014/029643

(56) Entgegenhaltungen:
- DE-A1- 4 207 709
- DE-U1- 20 003 579
- US-A- 4 128 147

## Beschreibung

Die Erfindung betrifft eine Vorrichtung zum Bremsen einer rotierenden Welle einer Anordnung, insbesondere eines Schienenfahrzeugs, mit einer rotierenden Wirbelstrombremse, bei der ein Verbindungsabschnitt zumindest eines Rotors der zur Drehmoment übertragenden Verbindung mit der Welle geeignet ausgebildet ist, mit einer Aufnahmeöffnung zum Aufnehmen der Welle versehen ist.

Eine derartige gattungsgemäße Vorrichtung zum Abbremsen von Rädern motorgetriebener Fahrzeuge ist beispielsweise aus der Druckschrift DE 200 03 579 U1 bekannt. Die dort beschriebene Wirbelstrombremse weist als Stator eine ringförmige feststehende Erregerscheibe und als Rotor eine fest mit einem Rad verbundene und mit dem Rad umlaufende Bremsscheibe auf. Die Erregerscheibe enthält eingebaut eine Erregerspulen-Anordnung und erzeugt ein Magnetfeld, das über einen Luftspalt in der Bremsscheibe Wirbelströme erzeugt, wodurch das Rad mit der Bremsscheibe gemeinsam abgebremst wird.

Ferner ist aus der Druckschrift DE 42 07 709 A1 eine Vorrichtung mit einer Elektromagnetkupplung und mit einer Wirbelstromkupplung zum Antrieb einer Welle bekannt, bei der ein als magnetisches Abschirmblech dienendes Lagerblech zur besseren Führung der Magnetkraftlinien der Elektromagnetkupplung dient.

Eine gattungsgemäße Vorrichtung ist beispielsweise auch aus der Druckschrift DE 689 14 940 T2 bekannt. Diese bekannte Vorrichtung weist außerdem eine Abschirmung zum magnetischen Abschirmen der rotierenden Wirbelstrombremse auf, bei der zumindest ein Abschirmteil aus antimagnetischem Werkstoff (Material) besteht. Dabei wird durch die Abschirmung eine magnetische Abdichtfunktion erzielt, durch die für das Bremsen effektive Magnetwege ausgebildet werden, um die Bremswirksamkeit der rotierenden Wirbelstrombremse zu verbessern. Die Abschirmung der bekannten Vorrichtung ist von einem magnetischen Abschirmgehäuse gebildet, bei dem zwei Zylinder zusammen einen Schlauch bilden. Dieser Schlauch ist derart ausgebildet, dass darin für das Wirbelstrombremsen erforderliche Mittel zum Erzeugen eines inhomogenen Magnetfeldes in Form von Dauermagneten und Teile einer die Dauermagneten tragenden und an einer Karosserie eines Fahrzeugs abgestützten Konstruktion, die einen Stator bildet, angeordnet und hin- und herbewegt werden können. Bei dieser bekannten Vorrichtung weist die Abschirmung also eine vergleichsweise komplizierte konstruktive Gestaltung auf und erfordert entsprechend viel Bauraum und spezielle Maßnahmen zu ihrer Befestigung an der Karosserie des Fahrzeugs.

Der Erfindung liegt die Aufgabe zu Grunde, eine Vorrichtung mit verbesserter Bremswirkung der oben genannten Art (DE 689 14 940 T2) zu schaffen, die konstruktiv einfacher gestaltet ist.

Gelöst wird die der Erfindung zu Grunde liegende Aufgabe bei der erfindungsgemäßen Vorrichtung mit den Merkmalen des Patentanspruches 1 durch eine Mitnehmernabe zur Bildung einer Welle-Nabe-Verbindung mit der Welle, wobei die Mitnehmernabe drehfest mit dem Verbindungsabschnitt des zumindest einen Rotors verbunden ist und das zumindest eine aus antimagnetischem Werkstoff (Material) bestehende Abschirmteil der Abschirmung, welches die Aufnahmeöffnung des Verbindungsabschnitts des zumindest einen Rotors magnetisch abschirmt, bildet.

Neben ihrer Verschleißfreiheit, ihrer Umweltfreundlichkeit - da sie praktisch keine Geräusche verursacht - und ihrer Wartungsfreundlichkeit weist die erfindungsgemäße Vorrichtung den Vorteil auf, dass das magnetische Abschirmen der Aufnahmeöffnung des Verbindungsabschnitts des zumindest einen Rotors eine magnetische Entkopplung der rotierenden Wirbelstrombremse von der Welle bewirkt, die in der Praxis oft aus magnetisch leitfähigem Werkstoff ausgebildet ist. Dadurch wird der Verlauf des magnetischen Flusses der Wirbelstrombremse hinsichtlich der daraus resultierenden Bremswirkung optimiert. Damit verbunden ist eine Wirkungsgraderhöhung der rotierenden Wirbelstrombremse. Durch die erzielte Eingrenzung des Wirkungsbereiches der auftretenden Magnetfelder wird außerdem eine schädliche magnetische Störaussendung vermieden.

In Folge der Wirkungsgraderhöhung der rotierenden Wirbelstrombremse kann beispielsweise bei gleichem Bremsmoment das Gewicht der rotierenden Wirbelstrombremse optimiert, insbesondere reduziert, werden. Die Gewichtsoptimierung ist für den Einsatz der rotierenden Wirbelstrombremse direkt auf der Welle sehr wichtig, insbesondere beim Einsatz der erfindungsgemäßen Vorrichtung in einem Schienenfahrzeug, wenn die abzubremsende Welle eine Radsatzwelle des Schienenfahrzeugs ist.

Die erfindungsgemäße Vorrichtung kann beispielsweise zur gravierenden Entlastung oder als Ersatz der bisher in der Praxis als Betriebsbremsen von Schienenfahrzeugen eingesetzten Reibungsbremsen dienen, so dass zur Ergänzung der erfindungsgemäßen Vorrichtung, die zum Abbremsen der wellen eine Rotation der Wellen voraussetzt, einzig eine vereinfachte Stoppbremse erforderlich wäre. So könnte beispielsweise bei einem als Laufwagen bezeichneten nicht angetriebener Wagen eines Schienenfahrzeugs der Bauraum, der bisher von bis zu vier auf Laufradsätzen angeordneten Reibungsbremsen und ihrer Wellenbremsscheiben eingenommen wurde, zur Installation zumindest einer erfindungsgemäße Vorrichtung hoher Bremsleistung dienen.

Außerdem weist die erfindungsgemäße Vorrichtung im Vergleich zu linearen Wirbelstrombremsen, die in der Praxis bereits zum Bremsen von Schienenfahrzeugen zum Einsatz kommen, wesentliche Vorteile auf. Lineare Wirbelstrombremsen erfordern beispielsweise aufgrund der notwendigen Wechselwirkung mit den Schienen hinsichtlich der Gestaltung des Drehgestells, das zur Montage der linearen Wirbelstrombremse dient, besondere Maßnahmen. Außerdem erfordern lineare Wirbelstrombremsen aufgrund der notwendigen Wechselwirkung mit den Schienen auch hinsichtlich der Gestaltung der Infrastruktur, beispielsweise hinsichtlich der Stabilität des Gleisaufbaus, besondere Maßnahmen. Im Vergleich hierzu ist die erfindungsgemäße Vorrichtung in einfacher Weise direkt auf einer Radsatzwelle eines Schienenfahrzeugs montierbar und unabhängig von der Infrastruktur einsetzbar.

Bei der erfindungsgemäßen Vorrichtung sind die Funktion der Drehmoment übertragenden Verbindung des zumindest einen Rotors der rotierenden Wirbelstrombremse mit der Welle und die Funktion der magnetischen Abschirmung der rotierenden Wirbelstrombremse in fertigungstechnisch und montagetechnisch einfacher Weise und damit kostengünstig in einer Funktionseinheit - der Mitnehmernabe - vereint.

Mit anderen Worten ist bei der erfindungsgemäßen Vorrichtung in vorteilhafter Weise ein spezieller Adapter (Mitnehmer) in Form der Mitnehmernabe dazu dienen, einen Teilabschnitt eines Antriebsstranges der Anordnung, Teil dessen die Welle ist und der sich von der Welle weiter bis zu einem von der Welle angetriebenen Nutzelement der Anordnung erstreckt, von der rotierenden Wirbelstrombremse magnetisch zu entkoppeln, wodurch ein Magnetfluss über diesen Teilabschnitt des Antriebsstranges verhindert ist.

Beim Einsatz der erfindungsgemäßen Vorrichtung in einem Schienenfahrzeug kann der spezielle Adapter also dazu dienen einen Teilabschnitt eines Antriebsstranges des Schienenfahrzeugs, der sich von der Radsatzwelle bis zu den beiden von der Radsatzwelle angetriebenen Räder erstreckt, von der rotierenden Wirbelstrombremse magnetisch zu entkoppeln.

Vorteilhafte Ausführungsformen der erfindungsgemäßen Vorrichtung sind in den Unteransprüchen 2 bis 8 angegeben.

So kann beispielsweise vorgesehen sein, dass sich die Abschirmung, insbesondere das zumindest eine Abschirmteil, in der axialen Richtung der Aufnahmeöffnung zumindest im Wesentlichen über die axiale Breite der Wirbelstrombremse erstreckt, um einen magnetischen Fluss über die Welle optimal zu unterdrücken.

Die Mitnehmernabe kann in verschiedenen Bauvarianten ausgeführt sein.

So kann in konstruktiv besonders einfacher Ausgestaltung die Mitnehmernabe als ein einteiliger Körper ausgebildet sein, der das Abschirmteil bildet und aus dem antimagnetischen Werkstoff, insbesondere aus antimagnetischem Stahl oder aus Aluminium besteht.

Alternativ hierzu kann die Mitnehmernabe zur Reduzierung ihres Gewichtes und zur Verbesserung ihrer Montagefähigkeit eine innere Nabenhülse und eine über die innere Nabenhülse geschobene äußere Nabenhülse aufweisen, wobei zumindest eine der beiden Nabenhülsen das Abschirmteil bildet und aus dem antimagnetischen Werkstoff, insbesondere aus antimagnetischem Stahl oder aus Aluminium besteht. - Vorzugsweise bildet dabei die äußere Nabenhülse das Abschirmteil, während die innere Nabenhülse aus einem ferromagnetischen Werkstoff, insbesondere Stahl oder Vergütungsstahl besteht.

Als vorteilhaft wird auch eine weitere Abschirmung zum elektrischen Abschirmen der Aufnahmeöffnung angesehen. - Vorzugsweise ist diese weitere Abschirmung von einer Füllung der Mitnehmernabe gebildet, die aus einem elektrischen Nichtleiter besteht und die einen die beiden Nabenhülsen trennenden Hohlraum ausfüllt.

Durch die zusätzliche elektrische Entkopplung der rotierenden wirbelstrombremse von der in der Praxis oft aus elektrisch leitfähigem Werkstoff bestehenden Welle wird ein Vagabundieren der im Rotor induzierten Wirbelströme in die Welle und von dort entlang des Teilabschnittes des Antriebsstranges auch bis zu dem von der Welle angetriebenen Nutzelement verhindert. Ein weiterer Vorteil ist, dass eine separate elektrische Isolierung von Lagern der Welle entfallen kann.

Als vorteilhaft wird es angesehen, wenn die Füllung aus einem elastischen Werkstoff, insbesondere aus einem Gummi, besteht, wenn also der elektrische Nichtleiter elastisch ist und somit eine gewisse Federung der wirbelstrombremse bewirkt und die ungefederte Masse der Wirbelstrombremse reduziert.

Die Erfindung bezieht sich auch auf eine Anordnung mit einer rotierenden Welle, die zum Bremsen der rotierenden Welle eine erfindungsgemäße Vorrichtung nach einem der Patentansprüche 1 bis 8 aufweist, wobei die Anordnung insbesondere ein Schienenfahrzeug ist.

Die Erfindung wird im Weiteren anhand der Figuren 1 bis 8 näher erläutert. Dabei zeigen die
- Figur 1: eine schematische Darstellung einer erfindungsgemäßen Anordnung in Form eines Schienenfahrzeugs mit rotierenden Wellen in Form von Radsatzwellen und mit erfindungsgemäßen Vorrichtungen zum Bremsen der rotierenden Wellen, bei der jede dieser Vorrichtungen jeweils neben einer rotierenden Wirbelstrombremse auch eine Abschirmung zum magnetischen Abschirmen der rotierenden Wirbelstrombremse aufweist, wobei die Abschirmung von einer Mitnehmernabe gebildet ist, die
- Figur 2: die in der Figur 1 schematisch gezeigte erste Ausführungsform der erfindungsgemäßen Vorrichtung in größerer Darstellung,
- Figuren 3 und 4: zwei weitere schematisch dargestellte Ausführungsformen der erfindungsgemäßen Vorrichtung, die sich insbesondere hinsichtlich der Bauform ihrer rotierenden Wirbelstrombremsen von der ersten Ausführungsform unterscheiden, die
- Figur 5: ein bevorzugtes Ausführungsbeispiel der in Figur 2 gezeigten Ausführungsform der erfindungsgemäßen Vorrichtung, mit einer ersten Bauvariante der Mitnehmernabe, die
- Figur 6: die Bauvariante der Mitnehmernabe aus Figur 5 perspektivisch und mit einem Ausbruch versehen dargestellt und die
- Figuren 7 und 8: zwei weitere Bauvarianten der Mitnehmernabe.

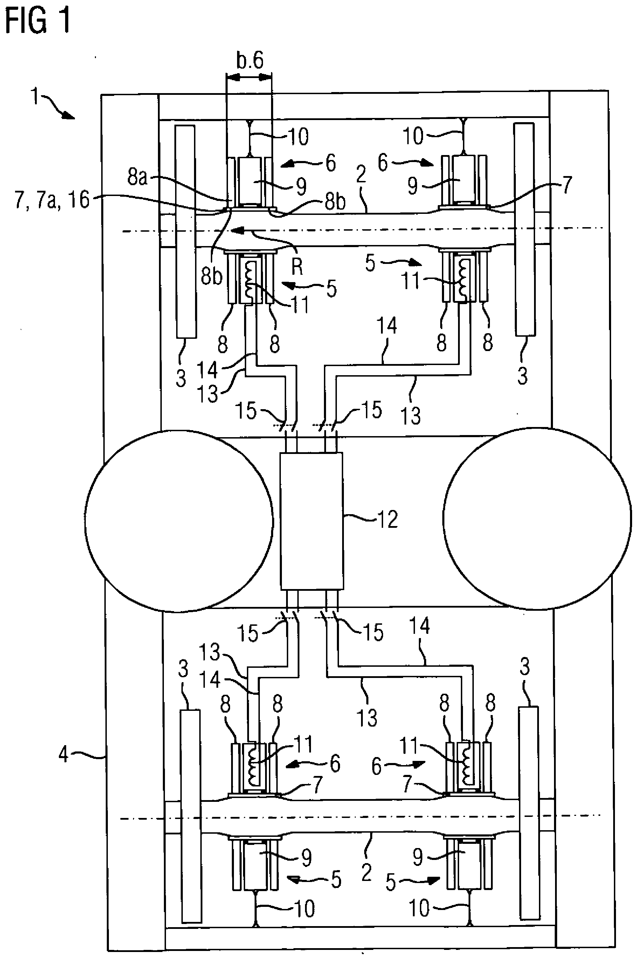

Die Figur 1 zeigt eine erfindungsgemäße Anordnung 1 in Form eines Schienenfahrzeugs. Das Schienenfahrzeug weist zwei rotierende Wellen 2 in Form von Radsatzwellen auf, die aus ferromagnetischem Werkstoff bestehen. An den Wellen 2 sind jeweils zwei Räder 3 befestigt, die von der jeweiligen Welle angetriebene Nutzelemente bilden. Die Wellen 2 sind über hier nicht gezeigte Lager drehbar an einem Drehgestell 4 des Schienenfahrzeugs gehalten. Die erfindungsgemäße Anordnung 1 weist außerdem Vorrichtungen 5 zum Bremsen der rotierenden Wellen 2 auf.

Die erfindungsgemäßen Vorrichtungen 5 zum Bremsen der rotierenden Wellen 2 umfassen jeweils neben einer rotierenden Wirbelstrombremse 6 auch eine Abschirmung 7 zum magnetischen Abschirmen der rotierenden Wirbelstrombremse 6.

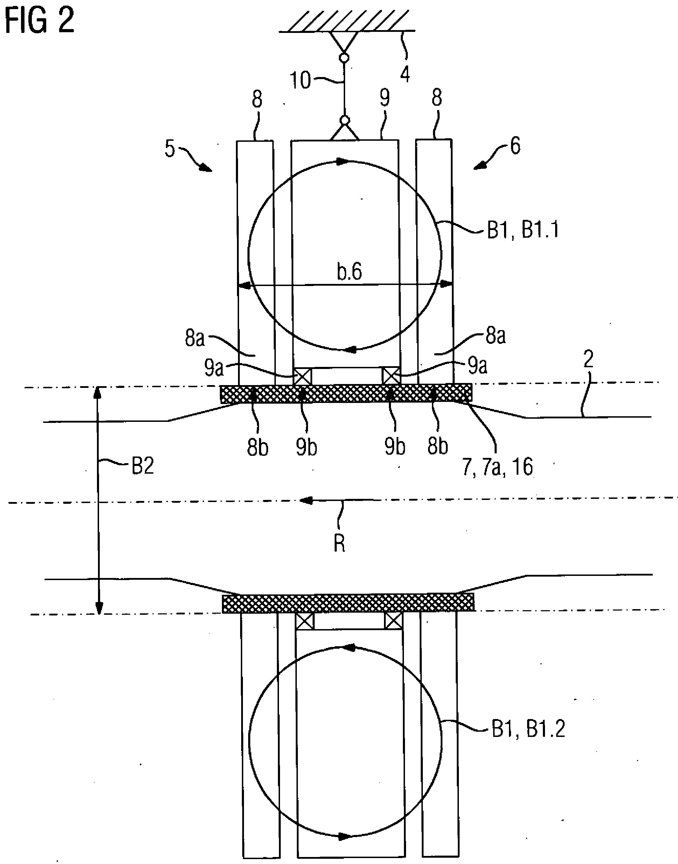

Die Figuren 1 und 2 zeigen die rotierende Wirbelstrombremse in einer ersten Bauform 6 (eine Ausführung mit Außenläufer-Rotoren).

Diese erste Bauform 6 der rotierenden Wirbelstrombremse weist zwei drehfest mit einer der rotierenden Wellen 2 verbundene Rotoren 8 und einen zwischen den Rotoren 8 angeordneten Stator 9 auf. Ein Drehlager 9a des Stators 9 bildet eine Durchtrittsöffnung 9b zum Durchtritt der zugeordneten Welle 2. Der Stator 9 ist über eine Drehmomentstütze 10 am Drehgestell 4 abgestützt. Anstelle der hier gezeigten zwei Rotoren 8 könnte aber auch nur ein Rotor vorgesehen sein.

Jeder der Rotoren 8 weist einen Verbindungsabschnitt 8a auf der zur Drehmoment übertragenden Verbindung mit der Welle geeignet ausgebildet und mit einer Aufnahmeöffnung 8b zum Aufnehmen der Welle 2 versehen ist.

Die Statoren 9 der rotierenden Wirbelstrombremsen 6 sind jeweils mit zumindest einer Erregerspule 11 zum Erzeugen eines räumlich inhomogenen Magnetfeldes versehen.

Die zumindest eine Erregerspule 11 ist von einer elektrischen Energiequelle 12 gespeist. Anschlüsse der zumindest einen Erregerspule 12 der Statoren 9 sind dabei über Verbindungen 13, 14 an die elektrische Energiequelle 12 angeschlossen. Im Zuge der Verbindungen 13, 14 kann ein Schalter 15 angeordnet sein.

Das im Bremsbetrieb - also bei Erregung der zumindest einen Erregerspule 11 mittels der elektrischen Energiequelle 12 - erzeugte räumlich inhomogene Magnetfeld induziert in den zugeordneten rotierenden Rotoren 8 Wirbelströme, die ihrerseits ein dem inhomogenen Magnetfeld entgegen gesetztes Magnetfeld induzieren und damit eine den Rotor 8 bremsende Kraft bewirken.

Vorzugsweise sind die Statoren 9 mit hier nicht gezeigten Klauenpolringen versehen im denen beim Erregen der Erregerspulen 11 ein funktionales Wechselverhältnis der Polarität hergestellt, also abwechselnd positive und negative Pole erzeugt werden. In den stirnseitig neben den Statoren 9 montierten Rotoren 8 werden bei deren Drehung die Wirbelströme induziert, die die Rotoren 8 je nach Erregerleistung abbremsen.

Die erfindungsgemäße Vorrichtung ist insbesondere hinsichtlich der Anzahl der Rotoren 8 und der Statoren 9 nicht von der Bauform der rotierenden Wirbelstrombremsen abhängig.

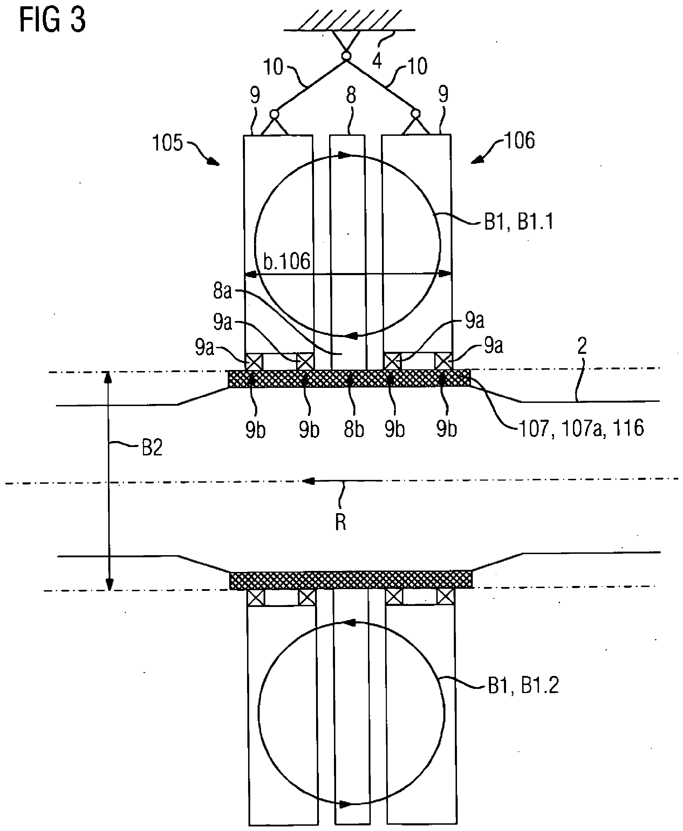

So weist eine alternative Bauform 106 der rotierenden Wirbelstrombremse (eine Ausführung mit Innenläufer-Rotor) bei einer in der Figur 3 gezeigten zweiten Ausführungsform 105 der erfindungsgemäßen Vorrichtung zwei äußere Statoren 9 auf, zwischen denen ein Rotor 8 angeordnet ist.

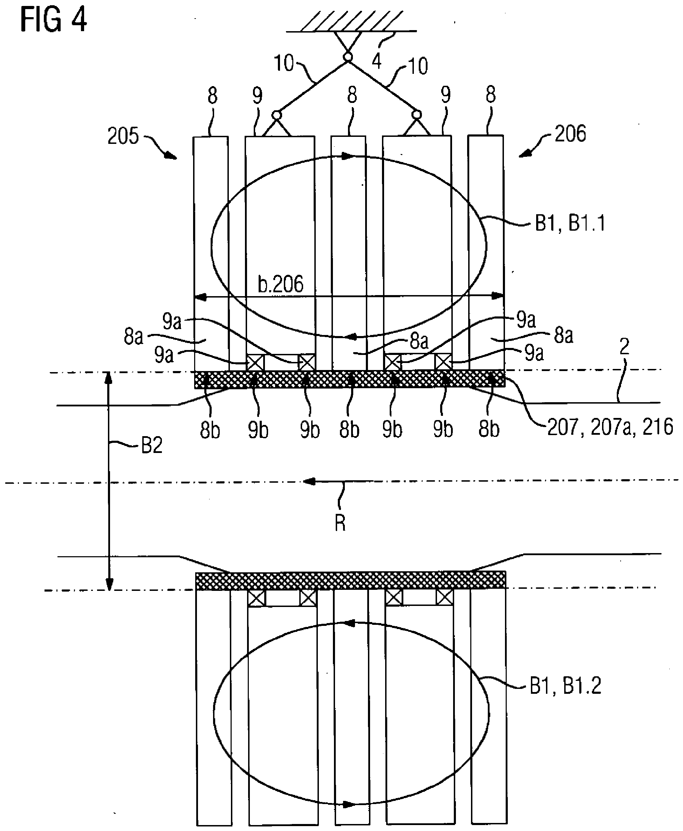

Ferner weist eine weitere alternative Bauform 206 der rotierenden Wirbelstrombremse (eine Ausführung mit drei Rotoren) bei einer in der Figur 4 gezeigten dritten Ausführungsform 205 der erfindungsgemäßen Vorrichtung drei Rotoren 8 und zwei Statoren 9 auf, wobei die Rotoren 8 und die Statoren 9 alternierend nebeneinander angeordnet sind.

Die Ausgestaltung der rotierenden Wirbelstrombremse ist aber nicht auf die dargestellten Bauformen 6; 106; 206 beschränkt. Vielmehr sind weitere beliebige Kombinationen von Rotoren 8 und Statoren 9 denkbar.

Gemäß den Figuren 2 bis 4 besteht bei der Abschirmung 7; 107; 207 zum magnetischen Abschirmen der rotierenden Wirbelstrombremse 6; 106; 206 zumindest ein Abschirmteil 7a; 107a; 207a aus einem antimagnetischem Werkstoff (Material), wobei dieses Abschirmteil 7a; 107a; 207a die Aufnahmeöffnung 8b des Verbindungsabschnitts 8a des Rotors 8 bzw. der Rotoren 8 und die Durchtrittsöffnung 9b des Drehlagers 9a des Stators 9 bzw. der Statoren 9 magnetisch abschirmt, sich also in der hier mit R bezeichneten axialen Richtung der Aufnahmeöffnung 8b zumindest im Wesentlichen über die axiale Breite b.6; b.106; b.206 der Wirbelstrombremse 6; 106; 206 erstreckt, um einen magnetischen Fluss über die Welle 2 zu unterdrücken.

Damit ist diese Abschirmung 7; 107; 207 und hier insbesondere deren Abschirmteil 7a; 107a; 207a so gestaltet, dass eine Übertragung der sehr hohen Magnetfelder der Wirbelstrombremse 6; 106; 206 auf die Welle 2 und von dort auf die von der Welle 2 angetriebenen Räder 3 (vgl. Figur 1) unterdrückt wird, wodurch eine Störung eines Bahnleitsystems, beispielsweise eine Störung von Schaltanlagen in Gleisnähe, vermieden werden kann.

Die Abschirmung 7; 107; 207 und hier insbesondere deren Abschirmteil 7a; 107a; 207a ist also so gestaltet, dass nicht nur eine Steigerung der Bremskraft der rotierenden Wirbelstrombremse bewirkt wird, sondern dass zusätzlich auch durch magnetische Streufelder verursachte Störungen des Bahnleitsystems unterbunden werden.

Um diese beiden Funktionen zu erfüllen, könnte die Abschirmung der erfindungsgemäßen Vorrichtung von der Welle gebildet werden, wenn diese Welle aus antimagnetischem Werkstoff (Material) besteht.

Alternativ hierzu könnte die Abschirmung der erfindungsgemäßen Vorrichtung auch von einer auf die Welle aufgepressten und aus antimagnetischem Werkstoff (Material) bestehenden Aufpresshülse gebildet sein.

Gemäß den Figuren 2 bis 8 ist die Abschirmung von einer Mitnehmernabe 16; 116; 216; 16.1; 16.2; 16.3 gebildet, die einen speziellen Adapter zur Direktmontage der rotierenden Wirbelstrombremse 6; 106; 206 auf der Welle 2 bildet. Durch das von dieser Mitnehmernabe 16; 116; 216; 16.1; 16.2; 16.3 gebildete Abschirmteil 7a; 107a; 207a; 7a.1; 7a.2; 7a.3 wird eine Unterteilung des die rotierende Wirbelstrombremse umgebenden Raumes in einen ringförmigen magnetisch aktiven Bereich B1 und einen die Welle einschließenden zylinderförmigen magnetisch inaktiven Bereich B2 bewirkt, wobei axial gegenüberliegende Teilbereiche B1.1 und B1.2 des magnetisch aktiven Bereichs B1 durch den dazwischen liegenden magnetisch inaktiven Bereich B2 voneinander getrennt sind. Durch diese Mitnehmernabe sind also die rotierende Wirbelstrombremse und die Welle voneinander derart magnetische entkoppelt, dass der Magnetfluss von einer in dem einen Teilbereich B1.1 befindlichen Seite des Stators bzw. der Statoren über den Rotor bzw. die Rotoren auf die im axial gegenüberliegenden Teilbereich B1.2 befindliche andere Seite des Stators bzw. der Statoren unterbunden ist.

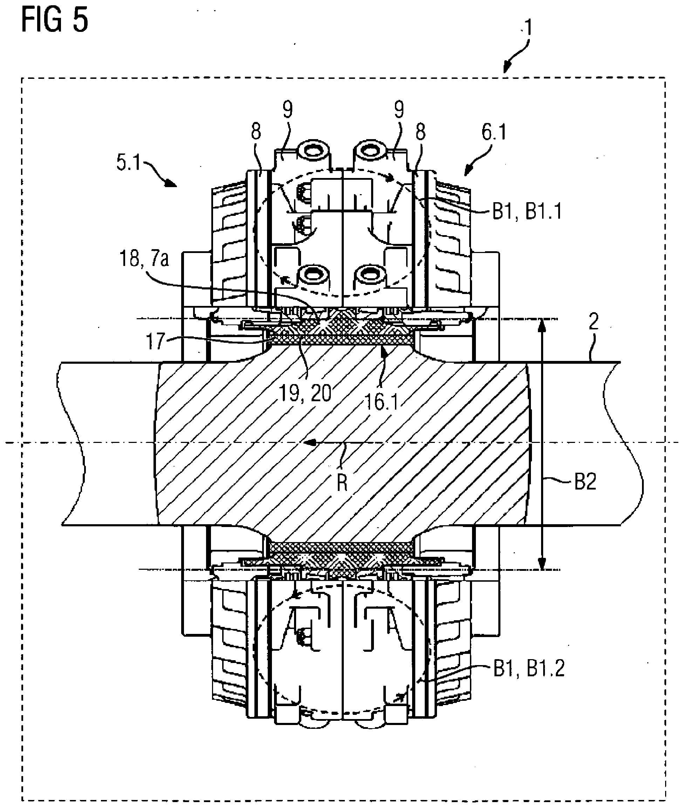

Die beispielsweise mittels Presssitz oder Kegelsitz auf der Welle 2 befestigte Mitnehmernabe (der spezielle Adapter) 16; 116; 216; 16.1; 16.2; 16.3 ist zum Einen Träger der Rotoren und Überträger des Bremsmomentes auf die Radachse. Zum Anderen unterbindet sie auch magnetische Streufelder zur Welle 2. Gemäß den Figuren 5 bis 8 kann auch der Aufbau der Mitnehmernabe variieren. Es können also verschiedene Bauvarianten der Mitnehmernabe zum Einsatz kommen.

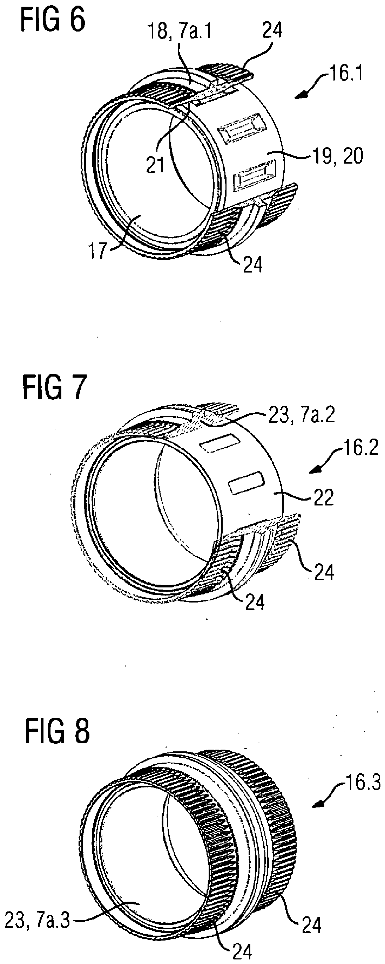

So zeigt die Figur 5 ein bevorzugtes Ausführungsbeispiel 5.1 der in Figur 2 nur schematisch dargestellten Ausführungsform 5 der erfindungsgemäßen Vorrichtung, mit einer ersten Bauvariante 16.1 der Mitnehmernabe. Diese erste Bauvariante 16.1 ist in der Figur 6 noch einmal in perspektivischer und an einer Stelle ausgebrochener Darstellung gezeigt.

Bei der bevorzugten ersten Bauvariante 16.1 weist die Mitnehmernabe eine innere Nabenhülse 17 und eine über die innere Nabenhülse 17 geschobene äußere Nabenhülse 18 auf, wobei zumindest eine der beiden Nabenhülsen - hier die äußere Nabenhülse 18 - das Abschirmteil 7a.1 bildet und aus dem antimagnetischen Werkstoff, insbesondere aus antimagnetischem Stahl oder aus Aluminium besteht.

Außerdem weist die ersten Bauvariante 16.1 der Mitnehmernabe eine Füllung 19 auf, die eine weitere Abschirmung 20 zum elektrischen Abschirmen der Aufnahmeöffnungen 8b der Rotoren und der Durchtrittsöffnung 9b des Drehlagers 9a des Stators bildet. Die Füllung 19 besteht aus einem elektrischen Nichtleiter - hier in Form eines Gummis - und füllt einen die beiden Nabenhülsen trennenden Hohlraum 21 aus. Diese zweite Abschirmung 20 unterdrückt den Fluss von der Wirbelstrombremse ausgehender Streuströme bzw. Leckströme zur Welle 2. Diese erste Bauvariante 16.1 der Mitnehmernabe kann hinsichtlich ihres Gewichtes sehr leicht gestaltet sein, wenn nämlich die äußere Nabenhülse 18 aus einem Leichtmetall besteht. Außerdem kann diese erste Bauvariante 16.1 der Mitnehmernabe gut montiert werden, wenn nämlich die innere Nabenhülse 17 aus einem Vergütungsstahl besteht, der durch seinen hohen Festigungswert beim Aufpressen der Mitnehmernabe 16.1 auf die Welle 2 nicht zu Kaltschweißungen führt.

Die erste Bauvariante 16.1 der Mitnehmernabe ist also ein spezieller Adapter aus Mehrmetall, mit einer inneren Nabenhülse 17 und einer äußeren Nabenhülse 18 sowie mit einer Füllung 19 aus einem elektrischen Nichtleiter, wobei die Füllung 19 beispielsweise als Füllschicht oder als Füllelement ausgebildet sein kann. Dadurch, dass die Füllung 19 vorzugsweise aus Gummi oder auch aus einem anderen elastischen Werkstoff besteht, wird zudem eine gewisse Federung der Wirbelstrombremse bewirkt und somit die ungefederte Masse der Wirbelstrombremse reduziert.

Gemäß Figur 7, die eine vereinfachte zweite Bauvariante 16.2 der Mitnehmernabe in Form einer Mehrmetallkombination zeigt, kann die Mitnehmernabe auch nur eine innere Nabenhülse 22 und eine über die innere Nabenhülse 22 geschobene äußere Nabenhülse 23 aufweisen, wobei zumindest eine der beiden Nabenhülsen - hier die äußere Nabenhülse 23 - das Abschirmteil 7a.2 bildet und aus dem antimagnetischen Werkstoff, insbesondere aus antimagnetischem Stahl oder aus Aluminium besteht. Die hier gezeigte innere Nabenhülse 22 besteht wieder aus einem ferromagnetischen Werkstoff, beispielsweise aus Stahl und bevorzugt aus Vergütungsstahl. Auch diese vereinfachte zweite Bauvariante 16.2 der Mitnehmernabe kann hinsichtlich ihres Gewichtes sehr leicht gestaltet sein, wenn nämlich die äußere Nabenhülse 23 wieder aus einem Leichtmetall besteht. Außerdem kann auch diese vereinfachte zweite Bauvariante der Mitnehmernabe gut montiert werden, wenn nämlich die innere Nabenhülse 22 wieder aus einem Vergütungsstahl besteht, der durch seinen hohen Festigungswert beim Aufpressen der Mitnehmernabe auf die Welle nicht zu Kaltschweißungen führt.
Mittels der antimagnetischen äußeren Nabenhülse 23, die hier das Abschirmteil 7a.2 bildet, wird auch bei dieser zweiten Bauvariante der Mitnehmernabe der Magnetfluss so blockiert, dass keine magnetischen Streuflüsse auf die Welle 2 abgeleitet werden.

Gemäß Figur 8, die eine noch weiter vereinfachte dritte Bauvariante 16.3 der Mitnehmernabe in Form einer Vollmetalllösung zeigt, kann die Mitnehmernabe auch als ein einteiliger Körper 23 (Vollmetallkörper) ausgebildet sein, der das Abschirmteil 7a.3 bildet und aus dem antimagnetischen Werkstoff, hier aus antimagnetischem Edelstahl besteht. Der einteilige Körper 23 kann aber auch aus einem anderen antimagnetischen Werkstoff, beispielsweise aus Aluminium bestehen.

Die Mitnehmernabe 16.1; 16.2; 16.3 weist Zahnprofile 24 zur Drehmoment übertragenden Verbindung mit den Rotoren auf, die mit hier nicht gezeigten Zahnprofilen der Rotoren korrespondieren (ineinander greifen). Diese Art der Verbindung ist vorteilhaft hinsichtlich des benötigten Bauraums, des Gewichtes und der magnetischen Entkopplung. Die Mitnehmernabe und die Rotoren können aber auch in anderer Weise, beispielsweise durch eine Presssitzverschraubung, miteinander verbunden werden.

## Patentansprüche

1. Vorrichtung (5; 105; 205; 5.1) zum Bremsen einer rotierenden Welle (2) einer Anordnung (1), insbesondere eines Schienenfahrzeugs,
- mit einer rotierenden Wirbelstrombremse (6; 106; 206; 6.1), bei der ein Verbindungsabschnitt (8a) zumindest eines Rotors (8), der zur Drehmoment übertragenden Verbindung mit der welle (**2**) geeignet ausgebildet ist, mit einer Aufnahmeöffnung (8b) zum Aufnehmen der Welle (2) versehen ist, und
- mit einer Abschirmung (7; 107; 207) zum magnetischen Abschirmen der rotierenden Wirbelstrombremse, bei der zumindest ein Abschirmteil (7a; 107a; 207a; 7a.1; 7a.2; 7a.3) aus antimagnetischem Werkstoff besteht,
**gekennzeichnet, durch** eine Mitnehmernabe (16; 116; 216; 16.1; 16.2; 16.3) zur Bildung einer Welle-Nabe-Verbindung mit der Welle,
wobei die Mitnehmernabe (16; 116; 216; 16.1; 16.2; 16.3) drehfest mit dem Verbindungsabschnitt (8a) des zumindest einen Rotors (8) verbunden ist und das zumindest eine aus antimagnetischem Werkstoff bestehende Abschirmteil (7a; 107a; 207a; 7a.1; 7a.2; 7a.3) der Abschirmung, welches die Aufnahmeöffnung (8b) magnetisch abschirmt, bildet.

2. Vorrichtung (5; 105; 205; 5.1) nach Anspruch 1,
**dadurch gekennzeichnet, dass** sich die Abschirmung(7; 107; 207), insbesondere das zumindest eine Abschirmteil (7a; 107a; 207a; 7a.1; 7a.2; 7a.3), in der axialen Richtung (R) der Aufnahmeöffnung (8b) zumindest im Wesentlichen über die axiale Breite (b.6; b.106; b.206; b.6.1) der Wirbelstrombremse erstreckt.

3. Vorrichtung (5) nach einem der Ansprüche 1 oder 2,
**dadurch gekennzeichnet, dass** die Mitnehmernabe (16.3) als ein einteiliger Körper (23) ausgebildet ist, der das Abschirmteil (7a.3) bildet und aus dem antimagnetischen Werkstoff, insbesondere aus antimagnetischem Stahl oder aus Aluminium besteht.

4. Vorrichtung (5; 5.1) nach einem der Ansprüche 1 oder 2,
**dadurch gekennzeichnet, dass**
die Mitnehmernabe (16.1; 16.2) eine innere Nabenhülse (17; 22) und eine über die innere Nabenhülse (17; 22) geschobene äußere Nabenhülse (18; 23) aufweist, wobei zumindest eine der beiden Nabenhülsen das Abschirmteil (7a.1; 7a.2) bildet und aus dem antimagnetischen Werkstoff, insbesondere aus antimagnetischem Stahl oder aus Aluminium besteht.

5. Vorrichtung (5; 5.1) nach Anspruch 4,
**dadurch gekennzeichnet,**
**dass** die äußere Nabenhülse (18; 23) das Abschirmteil (7a.1; 7a.2) bildet und
**dass** die innere Nabenhülse (17; 22) aus einem ferromagnetischen Werkstoff besteht.

6. Vorrichtung (5; 5.1) nach einem der Ansprüche 1 bis 5,
**gekennzeichnet, durch**
eine weitere Abschirmung (20) zum elektrischen Abschirmen der Aufnahmeöffnung (8b).

7. Vorrichtung (5; 5.1) nach Anspruch 6,
**dadurch gekennzeichnet, dass**
die weitere Abschirmung (20) von einer Füllung (19) der Mitnehmernabe (16.1) gebildet ist, die aus einem elektrischen Nichtleiter besteht und einen die beiden Nabenhülsen trennenden Hohlraum ausfüllt.

8. Vorrichtung (5; 5.1) nach Anspruch 7,
**dadurch gekennzeichnet, dass**
die Füllung (19) aus einem elastischen Werkstoff, insbesondere aus einem Gummi, besteht.

9. Anordnung (1), insbesondere Schienenfahrzeug, mit einer rotierenden Welle (2) und mit einer Vorrichtung (5; 105; 205; 5.1) zum Bremsen der rotierenden Welle,
**dadurch gekennzeichnet, dass**
die Vorrichtung (5; 105; 205; 5.1) nach einem der Ansprüche 1 bis 8 ausgebildet ist.

## Claims

1. Device (5; 105; 205; 5.1) for braking a rotating shaft (2) of an arrangement (1), in particular of a rail vehicle,
- having a rotating eddy current brake (6; 106; 206; 6.1), in which a connecting section (8a) of at least one rotor (8), which is suitably embodied for the torque-transmitting connection with the shaft (2), is provided with a receive opening (8b) for receiving the shaft (2), and
- having a screen (7; 107; 207) for magnetically screening the rotating eddy current brake, in which at least one screen part (7a; 107a; 207a; 7a.1; 7a.2; 7a.3) consists of non-magnetic material,
**characterised by**
a cam (16; 116; 216; 16.1; 16.2; 16.3) for forming a shaft-to-collar connection with the shaft,
wherein the cam (16; 116; 216; 16.1; 16.2; 16.3) is connected in a torque-proof manner to the connecting section (8a) of the at least one rotor (8) and forms the at least one screen part (7a; 107a; 207a; 7a.1; 7a.2; 7a.3) of the screen consisting of non-magnetic material, which magnetically screens the receive opening (8b).

2. Device (5; 105; 205; 5.1) according to claim 1, **characterised in that** the screen (7; 107; 207), in particular the at least one screen part (7a; 107a; 207a; 7a.1; 7a.2; 7a.3), extends in the axial direction (R) of the receive opening (8b) at least essentially across the axial width (b.6; b.106; b.206; b.6.1) of the eddy current brake.

3. Device (5) according to one of claims 1 or 2, **characterised in that** the cam (16.3) is embodied as a single-part body (23) which forms the screen part (7a.3) and consists of the non-magnetic material, in particular of non-magnetic steel or aluminium.

4. Device (5; 5.1) according to one of claims 1 or 2,
**characterised in that** the cam (16.1; 16.2) has an inner hub sleeve (17; 22) and an outer hub sleeve (18; 23) positioned over the inner hub sleeve (17; 22), wherein at least one of the two hub sleeves forms the screen part (7a.1; 7a.2) and consists of the non-magnetic material, in particular of non-magnetic steel or aluminium.

5. Device (5; 5.1) according to claim 4, **characterised in that** the outer hub sleeve (18; 23) forms the screen part (7a.1; 7a.2) and the inner hub sleeve (17; 22) consists of a ferromagnetic material.

6. Device (5; 5.1) according to one of claims 1 to 5,
**characterised by** a further screen (20) for electrically screening the receive opening (8b).

7. Device (5; 5.1) according to claim 6,
**characterised in that** the further screen (20) is formed by a filler (19) of the cam (16.1), which consists of an electrical non-conductor and fills a cavity which separates the two hub sleeves.

8. Device (5; 5.1) according to claim 7,
**characterised in that** the filler (19) consists of an elastic material, in particular of rubber.

9. Arrangement (1), in particular rail vehicle, having a rotating shaft (2) and having a device (5; 105; 205; 5.1) for braking the rotating shaft,
**characterised in that**
the device (5; 105; 205; 5.1) is embodied according to one of claims 1 to 8.

## Revendications

1. Dispositif ( 5; 105; 205; 5.1 ) de freinage d'un arbre ( 2 ) tournant d'un agencement ( 1 ), notamment d'un véhicule ferroviaire,
- comprenant un frein ( 6; 106; 206; 6.1 ) tournant à courant de Foucault, dans lequel une partie ( 8a ) de liaison d'au moins un rotor ( 8 ), qui est constitué de manière appropriée à la liaison transmettant un couple avec l'arbre ( 2 ), est pourvue d'une ouverture ( 8b ) de réception de l'arbre ( 2 ) et
- comprenant un blindage ( 7; 107; 207 ) pour le blindage magnétique du frein tournant à courant de Foucault, dans lequel au moins une partie ( 7a; 107a; 207a; 7a.1; 7a.2; 7a.3 ) de blindage est en un matériau antimagnétique, **caractérisé par**
un moyeu ( 16; 116; 216; 16.1; 16.2; 16.3 ) d'entraîneur pour former avec l'arbre une liaison arbre-moyeu,
dans lequel le moyeu ( 16; 116; 216; 16.1; 16.2; 16.3 ) d'entraîneur est solidaire en rotation de la partie ( 8a ) de liaison du au moins un rotor ( 8 ) et forme la au moins une partie ( 7a; 107a; 207a; 7a.1; 7a.2; 7a.3 ), en le matériau antimagnétique du blindage qui blinde magnétiquement l'ouverture ( 8b ) de réception.

2. Dispositif ( 5; 105; 205; 5.1 ) suivant la revendication 1,
**caractérisé en ce que**
le blindage ( 7; 107; 207 ), notamment la au moins une partie ( 7a; 107a; 207a; 7a.1; 7a.2; 7a.3 ) de blindage, s'étend dans la direction ( R ) axiale de l'ouverture ( 8b ) de réception, au moins sensiblement, sur toute la largeur ( b.6; b.106; b.206; b.6.1 ) axiale du frein à courant de Foucault.

3. Dispositif ( 5 ) suivant l'une des revendications 1 ou 2,
**caractérisé en ce que** le moyeu ( 16.3 ) d'entraîneur est sous la forme d'un corps ( 23 ) d'une seule pièce, qui forme la partie ( 7a.3 ) de blindage, et est constitué en le matériau antimagnétique, notamment en acier antimagnétique ou en aluminium.

4. Dispositif ( 5; 5.1 ) suivant l'une des revendications 1 ou 2,
caractérisé en ce
le moyeu ( 16.1; 16.2 ) d'entraîneur a un manchon ( 17; 22 ) intérieur et un manchon ( 18; 23 ) extérieur glissé sur le manchon ( 17; 22 ) intérieur, au moins l'un des deux manchons formant la partie ( 7a.1; 7a.2 ) de blindage et étant en le matériau antimagnétique, notamment en acier antimagnétique ou en aluminium.

5. Dispositif ( 5; 5.1 ) suivant la revendication 4,
**caractérisé en ce que**
le manchon ( 18; 23 ) extérieur forme la partie ( 7a.1; 7a.2 ) de blindage et
**en ce que** le manchon ( 17; 22 ) intérieur est en un matériau ferromagnétique.

6. Dispositif ( 5; 5.1 ) suivant l'une des revendications 1 à 5,
**caractérisé par**
un autre blindage ( 20 ) pour le blindage électrique de l'ouverture ( 8b ) de réception.

7. Dispositif ( 5; 5.1 ) suivant la revendication 6,
**caractérisé en ce que**
l'autre blindage ( 20 ) est formé d'un remplissage ( 19 ) du moyeu ( 16.1 ) d'entraîneur, qui est en un non-conducteur électrique et qui remplit l'espace vide séparant les deux manchons.

8. Dispositif ( 5; 5.1 ) suivant la revendication 7,
**caractérisé en ce que**
le remplissage ( 19 ) est constitué d'un matériau élastique, notamment en un caoutchouc.

9. Agencement ( 1 ), notamment véhicule ferroviaire, comprenant un arbre ( 2 ) tournant et un dispositif ( 5; 105; 205; 5.1 ) de freinage de l'arbre tournant,
**caractérisé en ce que**
le dispositif ( 5; 105; 205; 5.1 ) est constitué suivant l'une des revendications 1 à 8.
